# EUROPEAN PATENT SPECIFICATION

(11) **EP 4 418 541 B1**
(45) Date of publication and mention of the grant of the patent: **29.04.2026**
(21) Application number: 24155161.3
(22) Date of filing: 01.02.2024
(51) Int. Cl.: H04B 1/00, H04B 1/04

(54) **AN APPARATUS USED FOR TRANSMISSION AND RECEPTION IN A RADIO TELECOMMUNICATIONS NETWORK**
VORRICHTUNG ZUM SENDEN UND EMPFANGEN IN EINEM FUNKKOMMUNIKATIONSNETZ
APPAREIL UTILISÉ POUR LA TRANSMISSION ET LA RÉCEPTION DANS UN RÉSEAU DE RADIOCOMMUNICATION

(30) Priority: 16.02.2023 GB 202302199
(43) Date of publication of application: 21.08.2024
(73) Proprietor: Nokia Technologies Oy, 02610 Espoo (FI)
(72) Inventor: JALILI, Feridoon, Gistrup (DK); NIELSEN, Kim, Storvorde (DK)
(74) Representative: Nokia EPO representatives

(56) References cited:
- WO-A1-2011/115347
- US-A1- 2017 094 662
- US-A1- 2021 006 274

## Description

### TECHNOLOGICAL FIELD

Examples of the disclosure relate to an apparatus used for transmission and reception in a radio telecommunications network.

### BACKGROUND

An apparatus used for transmission and reception in a radio telecommunications network often comprises power amplifier (PA) circuitry and filter circuitry for filtering output of the power amplifier circuitry for transmission from an antenna.

In some examples, it is desirable to simultaneously transmit in one frequency range and to receive in multiple different frequency ranges.

WO2011/115347 (D1) relates to a wireless communication system that includes a relay node. According to D1, the relay node supporting carrier aggregation (CA) comprises a first antenna for performing communication with a base station through a backhaul link; a plurality of backhaul link radio frequency (RF) chains connected with the first antenna, for transmitting and receiving a radio signal for backhaul link transmission; a second antenna for performing communication with a user equipment through an access link; a plurality of access link RF units connected with the second antenna, for transmitting and receiving a radio signal for access link transmission; and a control unit controlling the plurality of backhaul link RF chains and the plurality of access link RF chains to share at least a part of RF components between the backhaul link RF chains and the access link RF chains.

### BRIEF SUMMARY

The invention is defined in the appended claims.

Various examples are provided in the description. According to claim 1 there is provided an apparatus comprising:
power amplifier circuitry;
proximal filter circuitry proximal to the power amplifier circuitry;
means for routing output of the power amplifier circuitry to the proximal filter circuitry to be filtered for transmission;
means for routing output of the power amplifier circuitry to remote filter circuitry remote from the power amplifier circuitry to be filtered for transmission;
wherein the proximal filter circuitry is configured to provide for simultaneous transmission in a transmission bandwidth of a first band, reception in a reception bandwidth of the first band and reception in a reception bandwidth of the second band and comprises
a proximal duplexer configured for the transmission bandwidth of the first band and the reception bandwidth of the first band, a proximal bandpass filter for the reception bandwidth of the second band and a proximal diplexer for isolating the transmission bandwidth of the first band and the reception bandwidth of the second band.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A shows another example of the subject matter described herein;
FIG. 3B shows another example of the subject matter described herein;
FIG. 4 shows another example of the subject matter described herein;
FIG. 5 shows another example of the subject matter described herein;
FIG. 6 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

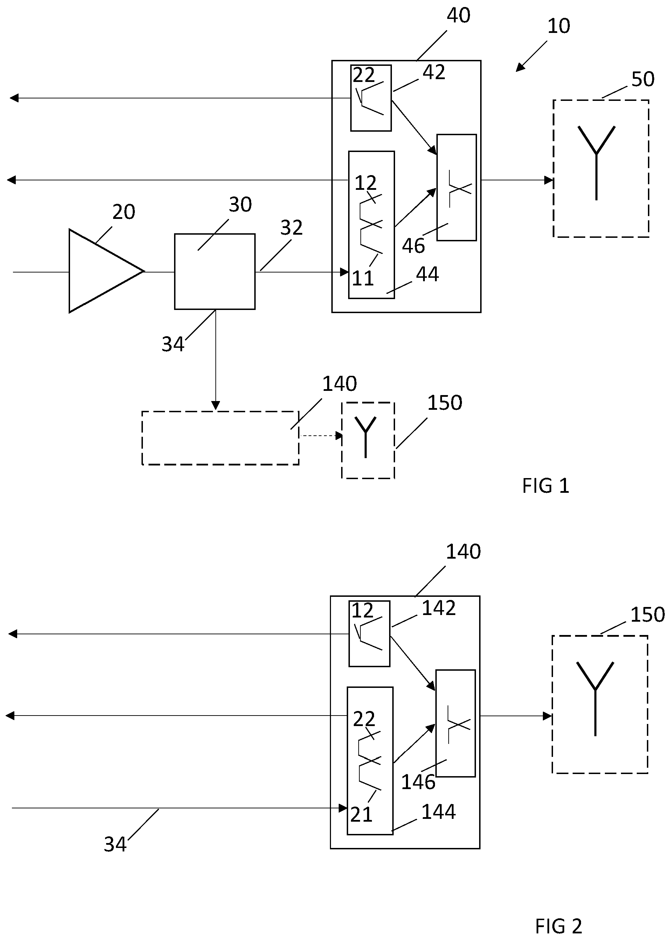

FIG 1 illustrates an example of an apparatus 10. The apparatus can be any suitable apparatus for transmission and reception of radio signals or a part for any suitable apparatus for transmission and reception of radio signals.

The apparatus can, for example, be a node or a part for a node in a cellular radio telecommunications network.

In some but not necessarily all examples, the apparatus 10 is a terminal of a cellular radio telecommunications network or a part for a terminal of a cellular radio telecommunications network.

In some but not necessarily all examples, the apparatus 10 is user equipment in a Third Generation Partnership Project 3GPP telecommunications network or a part for user equipment in a Third Generation Partnership Project 3GPP telecommunications network.

In some but not necessarily all examples, the apparatus 10 is a hand-portable apparatus, or a part for a hand-portable apparatus or a vehicle-based apparatus.

The apparatus 10 comprises: power amplification circuitry 20; filter circuitry 40; and a route 32 for routing output of the power amplification circuitry 20 to the filter circuitry 40 to be filtered for transmission from an antenna arrangement 50 proximal to the power amplification circuitry 20.

The apparatus 10 additionally comprises a route 34 for routing output of power amplification circuitry 20 to filter circuitry 140 to be filtered for transmission from an antenna arrangement 150.

The filter circuitry 40 is configured to provide for transmission in a transmission bandwidth of a first band 11, reception in a reception bandwidth of the first band 12 and reception in a reception bandwidth of a second band 22.

The filter circuitry 40 comprises a duplexer 44 configured for the transmission bandwidth of the first band 11 and the reception bandwidth of the first band 12, a bandpass filter 42 for the reception bandwidth of the second band 22 and a diplexer 46 for isolating the transmission bandwidth of the first band 11 and the reception bandwidth of the second band 22.

The antenna arrangement 50 can be, but is not necessarily, part of the apparatus 10.

The filter circuitry 140 can be, but is not necessarily, part of the apparatus 10. The antenna arrangement 150 can be, but is not necessarily, part of the apparatus 10.

The filter circuitry 40 is relatively proximal to the power amplification circuitry 20 compared to the filter circuitry 140. The filter circuitry 140 is relatively remote (distal) from the power amplification circuitry 20 compared to the filter circuitry 40. The filter circuitry 40 is therefore referred to as proximal filter circuitry 40. The filter circuitry 140 is therefore referred to as remote filter circuitry 140.

Components of the proximal filter circuitry 40 can be labelled as proximal components. Components of the remote filter circuitry 140 can be labelled as remote components.

The antenna arrangement 50 is relatively proximal to the power amplification circuitry 20 (and the filter circuitry 40) compared to the antenna arrangement 150. The antenna arrangement 150 is relatively remote (distal) from the power amplification circuitry 20 (and the filter circuitry 40) compared to the antenna arrangement 50. The antenna arrangement 50 can therefore be referred to as the proximal antenna arrangement 50. The antenna arrangement 150 can therefore be referred to as the remote antenna arrangement 150.

In at least some examples, the apparatus 10 comprises:
power amplification circuitry 20;
proximal filter circuitry 40 proximal to the power amplifier circuitry 20;
means 30, 32 for routing output of the power amplifier circuitry 20 to the proximal filter circuitry 40 to be filtered for transmission from a proximal antenna arrangement 50 proximal to the power amplifier circuitry 20;
means for 30, 34 for routing output of the power amplifier circuitry 20 to remote filter circuitry 140 remote from the power amplifier circuitry 20 to be filtered for transmission from a remote antenna arrangement 150 remote from the power amplifier circuitry 20;
wherein the proximal filter circuitry 40 is configured to provide for transmission in a transmission bandwidth of a first band 11, reception in a reception bandwidth of a first band 12 and reception in a reception bandwidth of a second band 22 and comprises
a proximal duplexer 44 configured for the transmission bandwidth of the first band 11 and the reception bandwidth of the first band 12, a proximal bandpass filter 42 for the reception bandwidth of the second band 22 and a proximal diplexer 46 for isolating the transmission bandwidth of the first band 11 and the reception bandwidth of the second band 22.

The apparatus 10 therefore provides for good isolation between the transmission bandwidth of the first band 11 and the reception bandwidth of the second band 22.

The apparatus 10 therefore enables simultaneously via the antenna arrangement 50:
transmission in the transmission bandwidth of the first band 11,
reception in the reception bandwidth of the first band 12, and
reception in the reception bandwidth of the second band 22.

The apparatus 10 therefore enables frequency division duplex (FDD) operation, with simultaneous transmission in one band and simultaneous reception in that band and another band.

In some but not necessarily all examples, apparatus 10 therefore enables carrier aggregation on the reception bandwidth of the first band 12 and the reception bandwidth of the second band 22.

The power amplifier circuitry 20 performs the functions of a power amplifier. In some but not necessarily all examples, the power amplifier circuitry 20 is a power amplifier and the term 'power amplifier circuitry' can then be replaced with 'power amplifier'.

The duplexer 44 and the bandpass filter 42 are coupled to different ports of the diplexer 46. The duplexer 44 and filter 42 are each coupled to a specific port of the diplexer 46 and these ports coupled to their respective independent interior high pass filter (HPF) or low pass filter (LPF) network topology in which each interior filter meets at a common node/port [which is coupled to the antenna in this figure]. Each of these LPF and HPF network topologies are designed to keep the two distinct bands apart (isolation). Thus, the coupling is therefore ideally zero between the duplexer 44 and filter 42.

The diplexer 46 and bandpass filter 42 are configured for the reception bandwidth of the second band 22. The duplexer 44 is configured for the transmission bandwidth of the first band 11 and the reception bandwidth of the first band 12.

The filter circuitry 40 has two intermediate gain minima (or attenuation maxima) wherein one intermediate gain minimum is defined within a band by the duplexer 44 and one intermediate gain minimum is defined by the diplexer 46 between bands.

The duplexer 44 is configured to isolate two ranges of frequencies in the same band. The diplexer 46 is configured to isolate two ranges of frequencies in distinct, different bands.

The duplexer 44 has two band passes in the same band isolated by an intermediate gain minimum. The diplexer 46 has a highpass and a lowpass isolated by an intermediate gain minimum.

A bandpass is a range of frequencies within which attenuation is significantly less than outside the range of frequencies. A low pass is a range of lower frequencies within which attenuation is significantly less than frequencies above the range. A high pass is a range of higher frequencies within which attenuation is significantly less than frequencies below the range.

In some but not necessarily all examples, the first band and the second band are less than 1GHz.

In some but not necessarily all examples, the first band and the second band are configurable for carrier aggregation, for example, the reception bandwidth of the first band 12 and the reception bandwidth of the second band 22 are configurable for carrier aggregation.

In some but not necessarily all examples, the first band and the second band are adjacent in a frequency spectrum without any intervening bands.

The first band can be at a higher frequency range than the second band or the first band can be at a lower frequency range than the second band.

The transmission bandwidth of the first band 11 can be at a higher frequency range than the reception bandwidth of the first band 12 or the transmission bandwidth of the first band 11 can be at a lower frequency range than the reception bandwidth of the first band 12.

A transmission bandwidth of the second band 21 can be at a higher frequency range than the reception bandwidth of the second band 22 or the transmission bandwidth of the second band 21 can be at a lower frequency range than the reception bandwidth of the second band 22.

The selection between the use of route 32 to the proximal filter circuitry 40 or the route 34 to the remote filter circuitry 140 is provided via switching circuitry 30.

The switching circuitry 30 provides means for routing output of the power amplifier circuitry 20 to the proximal filter circuitry 40 or the remote filter circuitry 140.

The apparatus 10, or another apparatus, can comprise remote filter circuitry 140. An example of the remote filter circuitry 140 is illustrated in FIG 2.

The remote filter circuitry 40 is configured to provide for transmission in a transmission bandwidth of a second band 21, reception in a reception bandwidth of the second band 22 and reception in a reception bandwidth of the first band 12.

The remote filter circuitry 40 comprises a remote duplexer 144 configured for the transmission bandwidth of the second band 21 and the reception bandwidth of the second band 22, a remote bandpass filter 142 for the reception bandwidth of the first band 12 and a remote diplexer 146 for isolating the transmission bandwidth of the second band 21 and the reception bandwidth of the first band 12.

The apparatus 10 therefore provides for good isolation between the transmission bandwidth of the second band 21 and the reception bandwidth of the first band 12.

The apparatus 10 therefore enables simultaneously via the antenna arrangement 150:
transmission in the transmission bandwidth of the second band 21,
reception in the reception bandwidth of the first band 12, and
reception in the reception bandwidth of the second band 22.

The apparatus 10 therefore enables frequency division duplex operation, with simultaneous transmission in one band and simultaneous reception in that band and another band.

In some but not necessarily all examples, apparatus 10 therefore enables carrier aggregation on the reception bandwidth of the first band 12 and the reception bandwidth of the second band 22.

The remote duplexer 144 and the remote bandpass filter 142 are coupled to different ports of the remote diplexer 146. The remote duplexer 144 and remote bandpass filter 142 are each coupled to a specific port of the remote diplexer 146 and these ports coupled to their respective independent interior high pass filter (HPF) or low pass filter (LPF) network topology in which each interior filter meets at a common node/port [which is coupled to the antenna in this figure]. Each of these LPF and HPF network topologies are designed to keep the two distinct bands apart (isolation). Thus, the coupling is therefore ideally zero between the remote duplexer 144 and the remote bandpass filter 142.

The remote diplexer 146 and the remote bandpass filter 142 are configured for the reception bandwidth of the first band 12. The remote duplexer 144 is configured for the transmission bandwidth of the second band 21 and the reception bandwidth of the second band 22.

The remote filter circuitry 140 has two intermediate gain minima wherein one intermediate gain minimum is defined within a band by the remote duplexer 144 and one intermediate gain minimum is defined by the remote diplexer 46 between bands.

The remote duplexer 144 is configured to isolate two ranges of frequencies in the same band. The remote diplexer 146 is configured to isolate two ranges of frequencies in distinct, different bands.

The remote duplexer 144 has two band passes in the same band isolated by an intermediate gain minimum. The remote diplexer 146 has a highpass and a lowpass isolated by an intermediate gain minimum.

A bandpass is a range of frequencies within which attenuation is significantly less than outside the range of frequencies. A low pass is a range of lower frequencies within which attenuation is significantly less than frequencies above the range. A high pass is a range of higher frequencies within which attenuation is significantly less than frequencies below the range.

The following examples relate to apparatus 10 that comprise
power amplifier circuitry 20;
proximal filter circuitry 40 (proximal to the power amplifier circuitry 20);
a proximal antenna arrangement 50 (proximal to the power amplifier circuitry 20);
a proximal route 32 for routing output of the power amplifier circuitry 20 to the proximal filter circuitry 40 to be filtered for transmission from the proximal antenna arrangement 50
remote filter circuitry 140 (remote from the power amplifier circuitry 20);
a remote antenna arrangement 150 (remote from the power amplifier circuitry 20);
a remote route 34 for routing output of power amplifier circuitry 20 to the remote filter circuitry 140 to be filtered for transmission from the remote antenna arrangement 150;
switching circuitry 30 for switching output of the power amplifier circuitry 20 to:
   the proximal route 32 to the proximal filter circuitry 40 or
   the remote route 34 to the remote filter circuitry 140.

The remote route 34 is a route configured to achieve remote routing. In at least some examples, some but not all of the remote route 34 is remote.

In at least some examples, the proximal antenna arrangement 50 that is coupled to the proximal filter circuitry 40 has an operational bandwidth that includes the transmission bandwidth of the first band 11, the reception bandwidth of the first band 12 and the reception bandwidth of the second band 22.

In at least some examples, the proximal antenna arrangement 50 is configured to receive, for transmission, a signal from the duplexer 44 of the proximal filter circuitry 40 that is limited to the transmission bandwidth of a first band 11, is configured to provide a signal to the duplexer 44 of the proximal filter circuitry 40 and is configured to provide a signal to the bandpass filter 42 of the proximal filter circuitry 40.

In at least some examples, the remote antenna arrangement 150 that is coupled to the remote filter circuitry 140 has an operational bandwidth that includes the transmission bandwidth of the second band 21, the reception bandwidth of the second band 22 and the reception bandwidth of the first band 12.

In at least some examples, the remote antenna arrangement 150 is configured to receive, for transmission, a signal from the remote duplexer 144 of the remote filter circuitry 140 that is limited to the transmission bandwidth of a second band 21, is configured to provide a signal to the remote duplexer 144 of the remote filter circuitry 140 and is configured to provide a signal to the remote bandpass filter 142 of the remote filter circuitry 140.

In some but not necessarily all examples, the antenna arrangement 150 and the antenna arrangement 50 have the same or overlapping operational bandwidths. In some but not necessarily all examples, the antenna arrangement 150 is spaced at least 5 cm from the antenna arrangement 50. In some but not necessarily all examples, the antenna arrangement 150 is spaced an electrical length of at least one quarter wavelength (at the highest frequency of the operational bandwidth) from the antenna arrangement 50. The electrical length depends upon the local relative permittivity. In some but not necessarily all examples, the antenna arrangement 150 is spaced an electrical length of at least one half wavelength (at the highest frequency of the operational bandwidth) from the antenna arrangement 50.

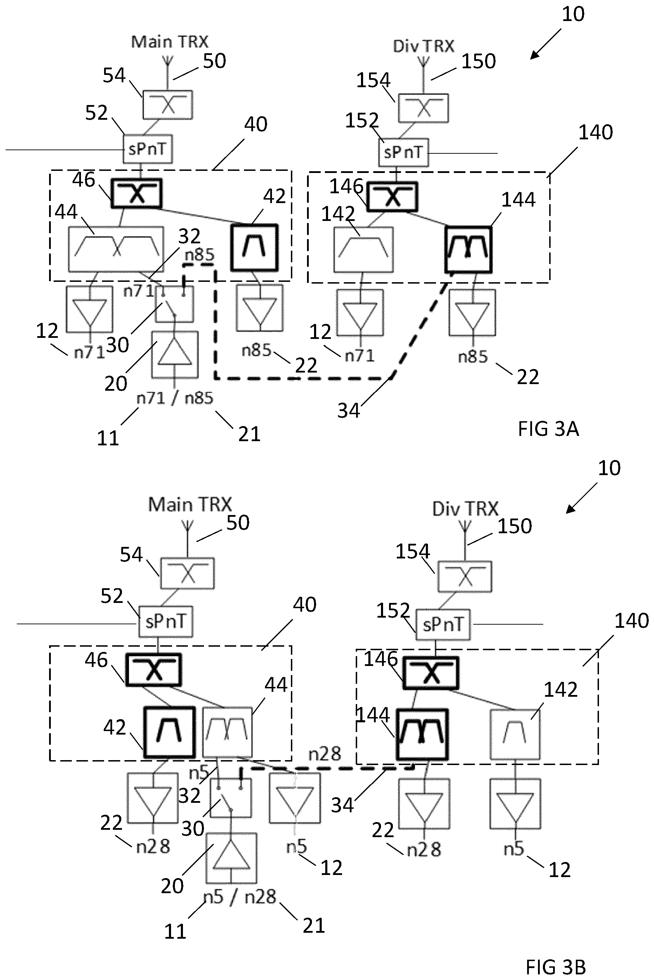

In the example illustrated in FIG 3A, the first band has a lower frequency range than the second band. The downlink bandwidth of the first band has a lower frequency range than an uplink bandwidth of the first band. The downlink bandwidth of the second band has a higher frequency range than an uplink bandwidth of the second band. The uplink bandwidth of the first band and the uplink bandwidth of the second band are adjacent.

In this example, the reception, or downlink, bandwidth of the first band 12 has a lower frequency range than the transmission, or uplink, bandwidth of the first band 11. The reception bandwidth of the second band 22 has a higher frequency range than the transmission bandwidth of the second band 21.

In this example, the first band is n71 and the second band is n85. The band n71 has downlink frequency band of 617 - 652 MHz and an uplink frequency band of 663 - 698 MHz. The band n85 has an uplink frequency band of 698-716 MHz and a downlink frequency band of 728 - 746 MHz. The uplink bandwidth of the first band n71 and the uplink bandwidth of the second band n85 are contiguous (adjacent and without a gap).

In the example illustrated in FIG 3B, the first band has a higher frequency range than the second band. The downlink bandwidth of the first band has a higher frequency range than an uplink bandwidth of the first band. The downlink bandwidth of the second band has a higher frequency range than an uplink bandwidth of the second band. The uplink bandwidth of the first band and the downlink bandwidth of the second band are adjacent.

In this example, the reception bandwidth of the first band 12 has a higher frequency range than the transmission bandwidth of the first band 11. The reception bandwidth of the second band 22 has a higher frequency range than the transmission bandwidth of the second band 21.

In this example, the first band is n5 and the second band is n28. The band n28 has an uplink frequency band of 703 - 748 MHz and a downlink frequency band of 758 - 803 MHz.

The band n5 has an uplink frequency band of 824 - 849 MHz and a downlink frequency band of 869 - 894 MHz. The downlink bandwidth of the second band n28 and the uplink bandwidth of the first band n5 are adjacent.

In the examples illustrated in FIGs 3A & 3B, the proximal diplexer 46 is coupled to the proximal antenna arrangement 50 via a switch 52 and a diplexer 54. This allows the proximal antenna arrangement 50 to be used for transmission and/or reception at different frequencies.

In the examples illustrated in FIGs 3A & 3B, the remote diplexer 146 is coupled to the remote antenna arrangement 150 via a switch 152 and a diplexer 154. This allows the remote antenna arrangement 150 to be used for transmission and/or reception at different frequencies.

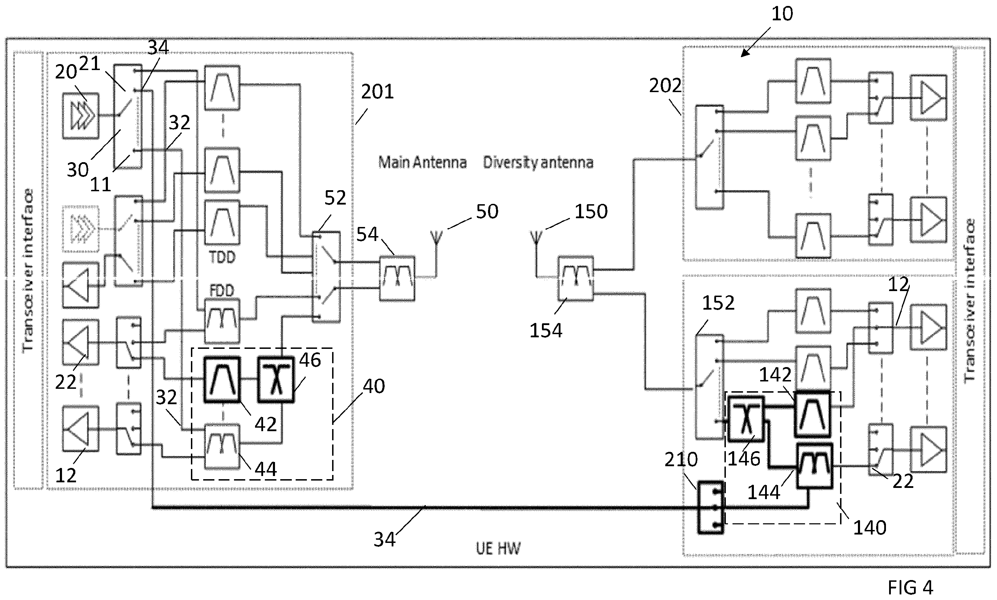

In some but not necessarily all examples, at least the proximal filter circuitry 40 is comprised in a first module 201 and the remote filter circuitry 140 is comprised in a second module 202. An example of this is illustrated in FIG 4.

In some but not necessarily all examples, the first module 201 comprises the proximal antenna arrangement 50 or a port thereto. In some but not necessarily all examples, the first module 201 comprises the switching circuitry 30. In some but not necessarily all examples, the first module 201 comprises the power amplifier circuitry 20.

In some but not necessarily all examples, the second module 202 comprises the remote antenna arrangement 150 or a port thereto. In some but not necessarily all examples, the second module does not comprise any power amplifier circuitry. In some but not necessarily all examples, the second module is a diversity module.

In the example illustrated in FIG 4, the first module 201 comprises proximal filter circuitry 40, switching circuitry 30 and power amplifier circuitry 20. It is coupled to the proximal antenna arrangement 50.

In the example illustrated in FIG 4, the second module 202 comprises remote filter circuitry 140. It is coupled to the remote antenna arrangement 150.

In some but not necessarily all examples, the antenna arrangement 150 is a diversity antenna arrangement relative to the antenna arrangement 50. In the example illustrated in FIG 4 the antenna arrangement 150 is a diversity antenna arrangement.

In the example illustrated in FIG 4 the second module 202 is a diversity module and does not comprise power amplifier circuitry. As a consequence, the second module 202 can be considerably smaller than the first module 201.

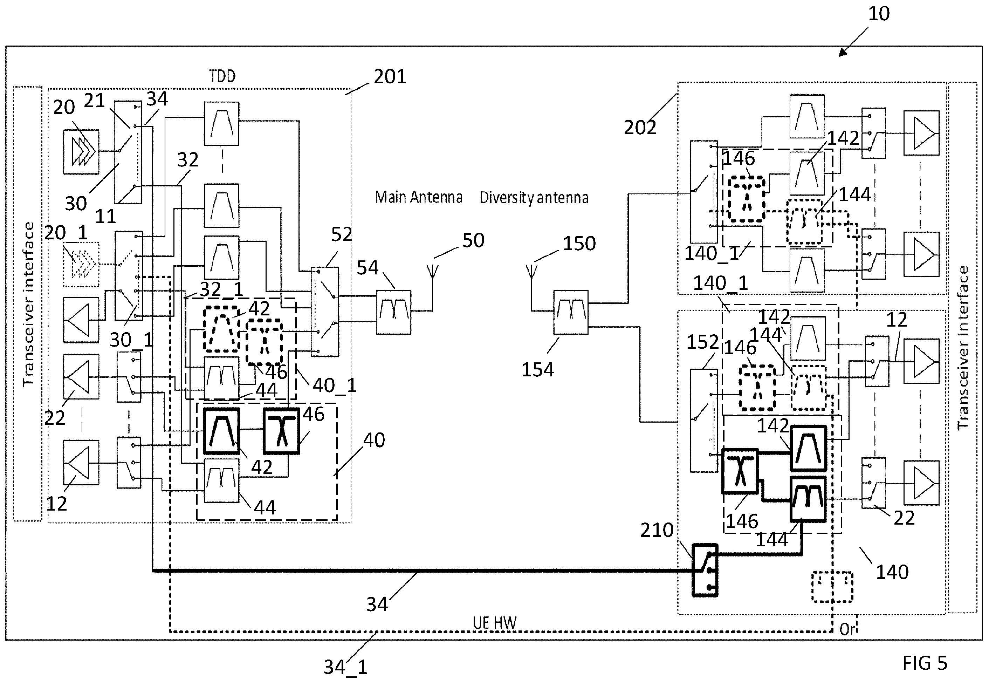

FIG 5 is similar to FIG 4. It illustrates that the apparatus 10 can comprise, for example in or coupled to a first module 201,
power amplifier circuitry 20;
multiple proximal filters 40 (proximal to the power amplifier circuitry 20);
a proximal antenna arrangement 50 (proximal to the power amplifier circuitry 20);
proximal routes 32 for routing output of the power amplifier circuitry 20 to the proximal filters 40 to be filtered for transmission from the proximal antenna arrangement 50;
switching circuitry 30 for switching output of the power amplifier circuitry 20 to one of the proximal routes 32 to the proximal filters 40 or to a remote route 34 to remote filter circuitry 140.

FIG 5 additionally illustrates that apparatus 10 can comprise, for example in or coupled to a second module 202,
multiple remote filters 140 (remote from the power amplifier circuitry 20); and
a remote antenna arrangement 150 (remote from the power amplifier circuitry 20).

The output of the power amplifier circuitry 20 can be switched to one of the remote filters 140 using a remote switch 210. The switch 210 is configured to switch output of the power amplifier circuitry 20 to one of multiple remote routes to respective remote filters 140.

FIG 5 also illustrates that the apparatus 10 can comprise, for example in or coupled to a first module 201,
a first power amplifier 20;
first proximal filter circuitry 40;
a first proximal route 32 for routing output of the first power amplifier 20 to the first proximal filter circuitry 40 to be filtered for transmission from a proximal antenna arrangement 50;
a first switch 30 for switching output of the first power amplifier 20 to the first proximal route 32 or to a first remote route 34 to first remote filter circuitry 140;
a second power amplifier 20_1;
second proximal filter circuitry 40_1;
a second proximal route 32_1 for routing output of the second power amplifier 20_1 to the second proximal filter 40_1 to be filtered for transmission from a proximal antenna arrangement 50;
a second switch 30_1 for switching output of the second power amplifier 20_1 to the second proximal route 32_1 or to a second remote route 34_1 to second remote filter circuitry 140_1.

In at least some examples, the first proximal filter 40 and the first remote filter 140 are configured for operation across a first frequency range and the second proximal filter and the second remote filter 140 are configured for operation across a second frequency range, different to (e.g. not overlapping) the first frequency range.

The apparatus 10 can therefore comprise:
for a first frequency range
   power amplifier circuitry 20;
   proximal filter circuitry 40 proximal to the power amplifier circuitry 20;
means 30, 32 for routing output of the power amplifier circuitry 20 to the proximal filter circuitry 40 to be filtered for transmission from a proximal antenna arrangement 50 proximal to the power amplifier circuitry 20;
means 30, 34 for routing output of power amplifier circuitry 20 to remote filter circuitry 140 remote from the power amplifier circuitry 20 to be filtered for transmission from a remote antenna arrangement 150 remote from the power amplifier circuitry 20;
wherein the proximal filter circuitry 40 is configured to provide for transmission in a transmission bandwidth of a first band 11, reception in a reception bandwidth of the first band 12 and reception in a reception bandwidth of the second band 22 and comprises
a proximal duplexer 44 configured for the transmission bandwidth of the first band and the reception bandwidth of the first band 12, a proximal bandpass filter 42 for the reception bandwidth of the second band 22 and a proximal diplexer 46 for isolating the transmission bandwidth of the first band 11 and the reception bandwidth of the second band 22;
for a second frequency range
   proximal power amplifier circuitry 20_1;
   proximal filter circuitry 40_1 proximal to the power amplifier circuitry 20_1;
means 30_1 for routing output of the power amplifier circuitry 20_1 to the proximal filter circuitry 40_1 to be filtered for transmission from the proximal antenna arrangement 50 proximal to the power amplifier circuitry 20_1;
means 30_1, 34_1 for routing output of power amplifier circuitry 20_1 to remote filter circuitry 140_1 remote from the power amplifier circuitry 20_1 to be filtered for transmission from the antenna arrangement 150 remote from the power amplifier circuitry 20_1;
wherein the proximal filter circuitry 40_1 is configured to provide for transmission in a transmission bandwidth of a third band, reception in a reception bandwidth of the third band and reception in a reception bandwidth of the fourth band and comprises
a proximal duplexer configured for the transmission bandwidth of the third band and the reception bandwidth of the third band, a bandpass filter for the reception bandwidth of the fourth band and a diplexer for isolating the transmission bandwidth of the third band and the reception bandwidth of the fourth band.

The apparatus 10 can additionally comprise:
for the first frequency range
remote filter circuitry 140 remote from the power amplifier circuitry 20 configured to provide for transmission in a transmission bandwidth of a second band, reception in a reception bandwidth of the second band 22 and reception in a reception bandwidth of the first band 12 and comprises:
   a remote duplexer 144 configured for the transmission bandwidth of the second band 21 and the reception bandwidth of the second band 22, a remote bandpass filter 142 for the reception bandwidth of the first band 12 and a remote diplexer 146 for isolating the transmission bandwidth of the second band 21 and the reception bandwidth of the first band 12;
   for the second frequency range,
   remote filter circuitry 140_1 remote from the power amplifier circuitry 20_1 configured to provide for transmission in a transmission bandwidth of a fourth band, reception in a reception bandwidth of the fourth band and reception in a reception bandwidth of the third band and comprises:
      a remote duplexer configured for the transmission bandwidth of the fourth band and the reception bandwidth of the fourth band, a remote bandpass filter for the reception bandwidth of the third band and a remote diplexer for isolating the transmission bandwidth of the fourth band and the reception bandwidth of the third band.

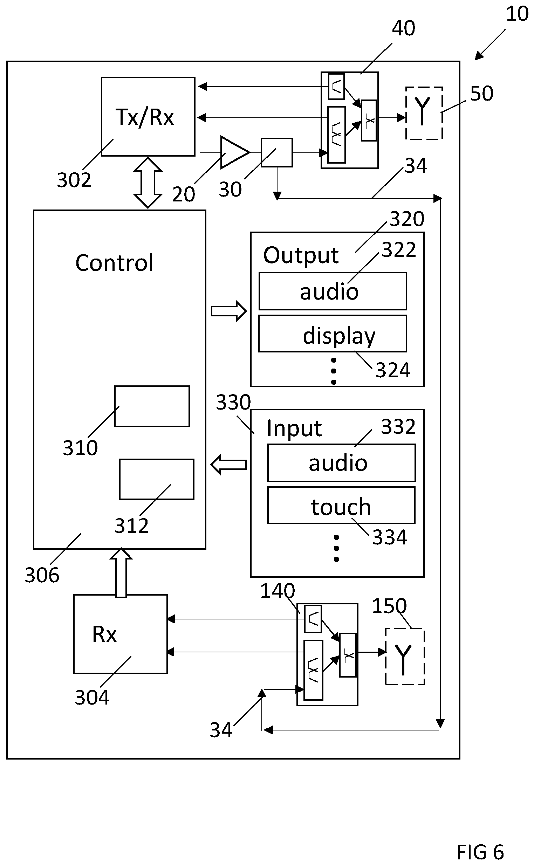

FIG 6 illustrates an example of an apparatus 10 as previously described.

In this example, the apparatus 10 is a terminal of a cellular radio telecommunications network. In 3GPP new radio, such a terminal is called user equipment. It can, for example, be carried by a user or can be a module for another apparatus, for example, a vehicle.

In this example the apparatus 10 comprises an antenna 50, filter circuitry 40, a switch 30, a power amplifier 20, transceiver 302, a route 34, filter circuitry 140, an antenna 150 and receiver circuitry 304.

As previously described, the transceiver 302 provides signals to the power amplifier 20, which are amplified and provided to the switch 30 as transmission signals. The transmission signals are routed, by the switch 30, either proximally to the filter circuitry 40 or remotely to the filter circuitry 140.

The filter circuitry 40 is coupled to antenna 50 to enable the transmission of filtered transmission signals routed from the switch 30. The filter circuitry 140 is coupled to antenna 150 to enable the transmission of filtered transmission signals routed 34 from the switch 30.

The transceiver 302 is also arranged to receive signals received at antenna 50 that have been filtered by the filter circuitry 40 as previously described. The filter circuitry 40 isolates the signals transmitted and received via the antenna 50.

Receiver circuitry 304 is arranged to receive signals received at the antenna 150 that have been filtered by the filter circuitry 140, as previously described. The filter circuitry 140 isolates the signals transmitted and received via the antenna 150.

The receiver circuitry 304 is controlled by a controller 306 which in this example comprises a processor 310 and a memory 312. The transceiver 302 is also controlled by the controller 306.

In this example, but not necessarily all examples, the controller 306 is configured to provide output from the apparatus 10 via an output interface 320. The output interface 320 can, for example, comprise an audio output interface 322 for providing audio output to a user of the apparatus 10, a display output interface 324 for providing visual output to a user of the apparatus 10, etc.

In this example, but not necessarily all examples, the controller 306 is configured to receive input to the apparatus 10 via an input interface 330. The input interface 330 can, for example, comprises an audio input interface 332 for receiving audio input from a user of the apparatus 10, a touch input interface 334 for receiving touch input from a user of the apparatus 10, etc

The transceiver 302, under control of the controller 306, provides signals to the power amplifier 20, which are amplified and provided to the switch 30 as transmission signals. The transmission signals are either routed proximally to the filter circuitry 40 or remotely to the filter circuitry 140. The filter circuitry 40 is coupled to antenna 50 to enable the isolated transmission of filtered transmission signals routed from the switch 30. The filter circuitry 140 is coupled to antenna 150 to enable the isolated transmission of filtered transmission signals routed 34 from the switch 30.

Reference will now be made to the foregoing FIGs to describe some use cases.

When a user equipment (UE), or any wireless electronic apparatus, is configured in a carrier aggregation (CA) configuration it can produce self-interference in its own receiver, coming from its own transmitter. The Third-Generation partnership (3GPP) specifications acknowledge this problem through a relaxation of the sensitivity requirement of the specific CA configuration. This relaxation of the sensitivity is called MSD - maximum sensitivity degradation.

It would be desirable to control maximum sensitivity degradation.

One option would be to replicate the 'main module' 201- the power amplifier 20 and the filter circuitry 40 at the diversity module 202 used to couple to the diversity antenna 150. However, adding a power amplifier to the diversity module 202 increases its size and cost. It would be desirable to avoid having remote power amplification circuitry.

In general it would be desirable to provide low-band low-band (LB-LB) combinations that consider design restrictions on printed circuit board (PCB) real estate, die area and cost. For example, it would be desirable to support band combinations made up of, for example, 600/700/800/900MHz.

The implementations illustrated provide various solutions to the problems identified.

Although the problems are stated in terms of carrier aggregation, the examples described have broader application. For example, they have application to dual connectivity (DC), or any scenario where uplink of two bands will be separated from the downlink of one or both bands.

The examples illustrated allow carrier aggregation in operational bands of 3GPP below 1 GHz while relaxing the problem of self-interference for improved receiver sensitivity in LB-LB carrier aggregation combination, considering design restriction on PCB real estate, die area and cost.

It would be desirable to provide carrier aggregation (CA) combination CA_n71A-n85A with 1 uplink (UL). In particular, it would be desirable to provide UL n71 with downlink (DL) n85, and UL n85 with DL n71.

The examples described in FIGs 1 to 5, related to front-end (FE) architectures and in some (but not necessarily all) examples relate to front end modules (FEM). The front-end architecture enables better isolation of low-band low-band CA operation. The design makes use of at least two antennas mandated in 5G for any band of operation, since reception (RX) diversity reception is mandated by the standards.

The examples illustrated place the uplink signal, which is the user equipment (UE) transmit (TX) signal at the "other antenna" than that of the operational band in which self-interference would occur.

The examples route the power amplification (PA) output of the main FEM 201 into the diversity FEM 202.

FIGs 3A and 3B are different in that the related band pass filter (BPF) 42 and duplexer 44 are swapped around in terms of position in the frequency spectrum.

The examples have the following advantages:
- Relaxes requirements of an existing problem in 3GPP standardization for LB-LB CA cases
- Improves self-interference suppression through uplink to other band downlink FEM separation
- Improves the overall insertion loss by using a combination of standard duplexer/filter and diplexer
- Removes penalties of typical duplex filter isolation limitations
- Solves an existing problem without increasing die size and cost of main front-end module (FEM)
- Solves an existing problem adding only a minimum of connection points (nodes) to the diversity FEM design without increasing the die size and cost
- PCB real estate expense is 1 additional RF track from main FEM to diversity FEM
- The solution can solve more LB-LB cases with self-interference aspects than
   CA_n71A-n85A
   CA_n5A-n28A

The example illustrated in FIG 3A, can be brought into use, when a UE is designed to support LB-LB configurations, and the network (NW) triggers a CA configuration through NW messages to the UE triggering a CA configuration of the specific LB-LB CA configurations.

For LB-LB CA combination, MSD on n71 DL and n85 UL caused by frequency proximity between n85 UL and n71 DL due to insufficient cross-band isolation can be relaxed. This is achieved in the Main module TRx path by the diplexer 44 which can provide slightly higher isolation and the design of a single band pass filter 42 with a steeper attenuation at the lower edge of pass-band frequency (close to n85 UL). Furthermore, n71 DL is now protected by antenna isolation (approximately 10 dB). Same mechanism is valid for MSD on n85 DL and n71 UL at remote side.

There are, benefits for the low-band low-band combinations where the uplink (UL) and downlink (DL) bands are not reverse. n71 has reverse uplink-downlink frequency allocation such that uplink is at a higher frequency than downlink. This puts the n71 UL contiguous with the n85 UL.

An example of a (not reverse) CA combination, CA_n5A-n28A, is illustrated in FIG 3B. n28 DL is adjacent n5 UL. For this CA combination, MSD on n28 DL caused by frequency proximity between n5 UL and n28 DL due to insufficient cross-band isolation can be relaxed since diplexer 46 can provide isolation and the design of single band pass filter 42 in main transceiver (TRx) path can be improved with a sharper edge at the upper pass-band frequency (close to n5 UL) since the lower pass-band frequency of this filter is now protected by antenna isolation (app. 10 dB).

FIG 4 illustrates a modified generic/typical HW implementation of the radio frequency (RF) front-end design inside a UE. The main transceiver front-end 201 is to the left and the one-or-more diversity modules 202 with antenna 150 to the right.

These front-end designs are not complete, since the UE can have more FEM's both for main and diversity and it has more than two antennas 50, 150, but the fundamental aspect of the implementation is best explained keeping the UE design simple.

The TX output of the main FEM module 201 is routed to the diversity module 202 as a new feature. The output of the power amplifier (PA) 20 is routed (by switch 30) into the diversity module 202, where a switch 210 is implemented to route 34 the TX uplink onto any duplex filter 144 supporting this new concept LB-LB separation. The new routing requires the duplex filter 144 to reside inside the diversity module 202.

It is recommended simply to use a copy of the duplexer 44 of the main FEM 201 as the duplexer 144 in the diversity FEM. This implementation step is shown in bold lines of FIG 4. An additional diplexer 146 between the two bands that are in conflict is used on both FEMs 201, 202.

It is easily understood from the purpose of the switch 210 that more CA combinations of LB-LB may be included, like CA_n5A-n28A e.g. n5 on main FEM 201 while n28 would have the duplexer 144 located in the diversity FEM 202.

Additionally n5 and n28 would pass diplexers 146 in each module 201, 202 as shown in FIG 4. There would be no need to add PA output paths since the switch 210 remains and only the input frequency to the PA 20 changes as the uplink band is selected.

This implementation of FIG 4 adds the antenna isolation as an additional attenuation, while the diplexers 46, 146 add to isolation between uplink and the diversity reception of the other band. Overall, the band-to-band self-interference suppression improves.

FIG 5 illustrates LB-LB CA support and how the solution scales through the changes of the dotted components and tracks inside the FEMs 201, 202. Note that only an additional PA output pin is required if more frequency ranges are needed from the same main FEM 201 or additional conflicts between bands of the same band group requires two PA's "On" inside the same main FEM 201 simultaneously.

Looking further into the implementation aspects of not simply solving this issue by using 2 identical main FEMs 201 and place one of them at the main antenna 50 and one at the diversity antenna 150, the arguments are of course that this is a potential solution, but it is not attractive for several reasons. This is because the die area of a diversity FEM 202 is much smaller than a main FEM 201 because of the absence of power amplification circuitry 20. Routing additional RF tracks towards the transceiver will require more PCB area. There is also a significant cost difference to FEMs of the diversity type consisting of switches, bandpass filters and LNAs, to adding power amplifiers as implemented in the main FEMs.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program [REF3]. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

An operational resonant mode (operational bandwidth) is a frequency range over which an antenna can efficiently operate. An operational resonant mode (operational bandwidth) may be defined as where the return loss S11 of the dipole antenna 20 is greater than an operational threshold T such as, for example, 3 or 4 dB and where the a radiated efficiency (er) is greater than an operational threshold such as for example -3dB in an efficiency plot. Radiation efficiency is the ratio of the power delivered to the radiation resistance of the antenna (Rrad) to the total power delivered to the antenna: er = (Rrad)/(RL + Rrad), where RL = loss resistance (which covers dissipative losses in the antenna itself). It should be understood that "radiation efficiency" does not include power lost due to poor VSWR (mismatch losses in the matching network which is not part of the antenna as such, but an additional circuit). The "total radiation efficiency" comprises the "radiation efficiency" and power lost due to poor VSWR [in dB]. The efficiency operational threshold could alternatively be expressed in relation to "total radiation efficiency" rather than "radiation efficiency".
2) Make sure the physical features that result in electrical characteristics are fully understood and described.

As used here 'module' refers to a unit or apparatus that excludes certain parts/components that would be added by an end manufacturer or a user.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features.

The scope of protection of the invention is defined in the appended claims.

## Claims

1. An apparatus (10) comprising:
power amplifier circuitry (20);
proximal filter circuitry (40) proximal to the power amplifier circuitry (20);
means (30, 32) for routing output of the power amplifier circuitry (20) to the proximal filter circuitry (40) to be filtered for transmission;
means (30, 34) for routing output of the power amplifier circuitry (20) to remote filter circuitry (140) remote from the power amplifier circuitry (20) to be filtered for transmission;
wherein the proximal filter circuitry (40) is configured to provide for simultaneous transmission in a transmission bandwidth of a first band, reception in a reception bandwidth of the first band and reception in a reception bandwidth of the second band and comprises
a proximal duplexer (44) configured for the transmission bandwidth of the first band and the reception bandwidth of the first band, a proximal bandpass filter (42) for the reception bandwidth of the second band and a proximal diplexer (46) for isolating the transmission bandwidth of the first band and the reception bandwidth of the second band.

2. An apparatus (10) as claimed in claim 1 wherein the first band and the second band are adjacent in a frequency spectrum.

3. An apparatus (10) as claimed in claim 1 wherein the first band and the second band are configurable for carrier aggregation.

4. An apparatus (10) as claimed in claim 1 wherein the first band and the second band are less than 1GHz.

5. An apparatus (10) as claimed in claim 1 wherein the first band is n71 and the second band is n85.

6. An apparatus (10) as claimed in claim 1 wherein the first band is n5 and the second band is n28.

7. An apparatus (10) as claimed in any preceding claim wherein the proximal filter circuitry (40) has two intermediate gain minima wherein one intermediate gain minima are defined by the proximal duplexer (44) within a band and one intermediate gain minima is defined by the proximal diplexer (46) between bands.

8. An apparatus (10) as claimed in any preceding claim wherein the proximal duplexer (44) is configured to isolate two ranges of frequencies in the same band
wherein the proximal diplexer (46) is configured to isolate two ranges of frequencies in distinct, different bands.

9. An apparatus (10) as claimed in any preceding claim comprising switching means for routing output of the power amplifier circuitry (20) to the proximal filter circuitry (40) or the remote filter circuitry (140).

10. An apparatus (10) as claimed in any preceding claim comprising an antenna arrangement coupled to the proximal filter circuity, wherein the antenna arrangement has an operational bandwidth that includes the transmission bandwidth of the first band, the reception bandwidth of the first band and the reception bandwidth of the second band.

11. An apparatus (10) as claimed in any preceding claim configured as a module.

12. An apparatus (10) as claimed in any preceding claim comprising:
remote filter circuitry (140) remote from the power amplifier circuitry (20) configured to provide for transmission in a transmission bandwidth of a second band, reception in a reception bandwidth of the second band and reception in a reception bandwidth of the first band and comprises
a remote duplexer configured for the transmission bandwidth of the second band and the reception bandwidth of the second band, a remote bandpass filter for the reception bandwidth of the first band and a remote diplexer for isolating the transmission bandwidth of the second band and the reception bandwidth of the first band.

13. An apparatus (10) as claimed in any preceding claim comprising a remote antenna arrangement coupled to the remote filter circuity, wherein the remote antenna arrangement has an operational bandwidth than includes the transmission bandwidth of the second band, the reception bandwidth of the second band and the reception bandwidth of the first band.

14. An apparatus (10) as claimed in any of claims 12 or 13, when dependent upon claim 10, comprising the module and comprising an additional module comprising at least the remote filter circuitry (140).

15. An apparatus (10) as claimed in any preceding claim comprising:
for a first frequency range
power amplifier circuitry (20);
proximal filter circuitry (40) proximal to the power amplifier circuitry (20);
means (30, 32) for routing output of the power amplifier circuitry (20) to the proximal filter circuitry (40) to be filtered for transmission from a proximal antenna arrangement proximal to the power amplifier circuitry (20);
means (30, 34) for routing output of the power amplifier circuitry (20) to remote filter circuitry (140) remote from the power amplifier circuitry (20) to be filtered for transmission from a remote antenna arrangement remote from the power amplifier circuitry (20);
wherein the proximal filter circuitry (40) is configured to provide for simultaneous transmission in a transmission bandwidth of a first band, reception in a reception bandwidth of the first band and reception in a reception bandwidth of the second band and comprises
a proximal duplexer (44) configured for the transmission bandwidth of the first band and the reception bandwidth of the first band, a proximal bandpass filter (42) for the reception bandwidth of the second band and a proximal diplexer (46) for isolating the transmission bandwidth of the first band and the reception bandwidth of the second band;
for a second frequency range
second power amplifier circuitry;
second proximal filter circuitry proximal to the second power amplifier circuitry;
means for routing output of the second power amplifier circuitry to the second proximal filter circuitry to be filtered for transmission from the proximal antenna arrangement proximal to the power amplifier circuitry;
means for routing output of the second power amplifier circuitry to second remote filter circuitry remote from the second power amplifier circuitry to be filtered for transmission from the remote antenna arrangement remote from the power amplifier circuitry;
wherein the second proximal filter circuitry is configured to provide for simultaneous transmission in a transmission bandwidth of a third band, reception in a reception bandwidth of the third band and reception in a reception bandwidth of the fourth band and comprises
a second proximal duplexer configured for the transmission bandwidth of the third band and the reception bandwidth of the third band, a second proximal bandpass filter for the reception bandwidth of the fourth band and a second proximal diplexer for isolating the transmission bandwidth of the third band and the reception bandwidth of the fourth band.

## Patentansprüche

1. Vorrichtung (10), umfassend:
eine Leistungsverstärker-Schaltungsanordnung (20) ;
eine proximale Filterschaltungsanordnung (40), die proximal zur Leistungsverstärker-Schaltungsanordnung (20) ist ;
Mittel (30, 32) zum Weiterleiten des Ausgangs der Leistungsverstärker-Schaltungsanordnung (20) an die proximale Filterschaltungsanordnung (40), um für die Übertragung gefiltert zu werden ;
Mittel (30, 34) zum Weiterleiten des Ausgangs der Leistungsverstärker-Schaltungsanordnung (20) an eine von der Leistungsverstärker-Schaltungsanordnung (20) entfernte Filterschaltungsanordnung (140), um für die Übertragung gefiltert zu werden ;
wobei die proximale Filterschaltungsanordnung (40) konfiguriert ist, um eine gleichzeitige Übertragung in einer Übertragungsbandbreite eines ersten Bandes, einen Empfang in einer Empfangsbandbreite des ersten Bandes und einen Empfang in einer Empfangsbandbreite des zweiten Bandes zu ermöglichen, und umfasst
einen proximalen Duplexer (44), der für die Übertragungsbandbreite des ersten Bandes und die Empfangsbandbreite des ersten Bandes konfiguriert ist, einen proximalen Bandpassfilter (42) für die Empfangsbandbreite des zweiten Bandes und einen proximalen Diplexer (46) zur Isolierung der Übertragungsbandbreite des ersten Bandes und der Empfangsbandbreite des zweiten Bandes.

2. Vorrichtung (10) nach Anspruch 1, wobei das erste Band und das zweite Band in einem Frequenzspektrum benachbart sind.

3. Vorrichtung (10) nach Anspruch 1, wobei das erste Band und das zweite Band für Carrier Aggregation konfigurierbar sind.

4. Vorrichtung (10) nach Anspruch 1, wobei das erste Band und das zweite Band kleiner als 1 GHz sind.

5. Vorrichtung (10) nach Anspruch 1, wobei das erste Band n71 und das zweite Band n85 ist.

6. Vorrichtung (10) nach Anspruch 1, wobei das erste Band n5 und das zweite Band n28 ist.

7. Vorrichtung (10) nach einem der vorhergehenden Ansprüche, wobei die proximale Filterschaltungsanordnung (40) zwei Zwischengewinnminima aufweist, wobei ein Zwischengewinnminimum durch den proximalen Duplexer (44) innerhalb eines Bandes definiert ist und ein Zwischengewinnminimum durch den proximalen Diplexer (46) zwischen Bändern definiert ist.

8. Vorrichtung (10) nach einem der vorhergehenden Ansprüche, wobei der proximale Duplexer (44) konfiguriert ist, um zwei Frequenzbereiche im selben Band zu isolieren ; wobei der proximale Diplexer (46) konfiguriert ist, um zwei Frequenzbereiche in verschiedenen, unterschiedlichen Bändern zu isolieren.

9. Vorrichtung (10) nach einem der vorhergehenden Ansprüche, umfassend Schaltmittel zum Weiterleiten des Ausgangs der Leistungsverstärker-Schaltungsanordnung (20) an die proximale Filterschaltungsanordnung (40) oder die entfernte Filterschaltungsanordnung (140).

10. Vorrichtung (10) nach einem der vorhergehenden Ansprüche, umfassend eine Antennenanordnung, die mit der proximalen Filterschaltungsanordnung gekoppelt ist, wobei die Antennenanordnung eine Betriebsbandbreite aufweist, die die Übertragungsbandbreite des ersten Bandes, die Empfangsbandbreite des ersten Bandes und die Empfangsbandbreite des zweiten Bandes umfasst.

11. Vorrichtung (10) nach einem der vorhergehenden Ansprüche, die als Modul konfiguriert ist.

12. Vorrichtung (10) nach einem der vorhergehenden Ansprüche, umfassend :
eine von der Leistungsverstärker-Schaltungsanordnung (20) entfernte Filterschaltungsanordnung (140), die konfiguriert ist, um eine Übertragung in einer Übertragungsbandbreite eines zweiten Bandes, einen Empfang in einer Empfangsbandbreite des zweiten Bandes und einen Empfang in einer Empfangsbandbreite des ersten Bandes zu ermöglichen, und umfasst
einen entfernten Duplexer, der für die Übertragungsbandbreite des zweiten Bandes und die Empfangsbandbreite des zweiten Bandes konfiguriert ist, einen entfernten Bandpassfilter für die Empfangsbandbreite des ersten Bandes und einen entfernten Diplexer zur Isolierung der Übertragungsbandbreite des zweiten Bandes und der Empfangsbandbreite des ersten Bandes.

13. Vorrichtung (10) nach einem der vorhergehenden Ansprüche, umfassend eine entfernte Antennenanordnung, die mit der entfernten Filterschaltungsanordnung gekoppelt ist, wobei die entfernte Antennenanordnung eine Betriebsbandbreite aufweist, die die Übertragungsbandbreite des zweiten Bandes, die Empfangsbandbreite des zweiten Bandes und die Empfangsbandbreite des ersten Bandes umfasst.

14. Vorrichtung (10) nach einem der Ansprüche 12 oder 13, wenn abhängig von Anspruch 10, umfassend das Modul und umfassend ein zusätzliches Modul, das mindestens die entfernte Filterschaltungsanordnung (140) umfasst.

15. Vorrichtung (10) nach einem der vorhergehenden Ansprüche, umfassend :
für einen ersten Frequenzbereich
eine Leistungsverstärker-Schaltungsanordnung (20) ;
eine proximale Filterschaltungsanordnung (40), die proximal zur Leistungsverstärker-Schaltungsanordnung (20) ist ;
Mittel (30, 32) zum Weiterleiten des Ausgangs der Leistungsverstärker-Schaltungsanordnung (20) an die proximale Filterschaltungsanordnung (40), um für die Übertragung von einer proximalen Antennenanordnung, die proximal zur Leistungsverstärker-Schaltungsanordnung (20) ist, gefiltert zu werden ;
Mittel (30, 34) zum Weiterleiten des Ausgangs der Leistungsverstärker-Schaltungsanordnung (20) an die entfernte Filterschaltungsanordnung (140), die von der Leistungsverstärker-Schaltungsanordnung (20) entfernt ist, um für die Übertragung von einer entfernten Antennenanordnung, die von der Leistungsverstärker-Schaltungsanordnung (20) entfernt ist, gefiltert zu werden ;
wobei die proximale Filterschaltungsanordnung (40) konfiguriert ist, um eine gleichzeitige Übertragung in einer Übertragungsbandbreite eines ersten Bandes, einen Empfang in einer Empfangsbandbreite des ersten Bandes und einen Empfang in einer Empfangsbandbreite des zweiten Bandes zu ermöglichen, und umfasst
einen proximalen Duplexer (44), der für die Übertragungsbandbreite des ersten Bandes und die Empfangsbandbreite des ersten Bandes konfiguriert ist, einen proximalen Bandpassfilter (42) für die Empfangsbandbreite des zweiten Bandes und einen proximalen Diplexer (46) zur Isolierung der Übertragungsbandbreite des ersten Bandes und der Empfangsbandbreite des zweiten Bandes ;
für einen zweiten Frequenzbereich
eine zweite Leistungsverstärker-Schaltungsanordnung ;
eine zweite proximale Filterschaltungsanordnung, die proximal zur zweiten Leistungsverstärker-Schaltungsanordnung ist ;
Mittel zum Weiterleiten des Ausgangs der zweiten Leistungsverstärker-Schaltungsanordnung an die zweite proximale Filterschaltungsanordnung, um für die Übertragung von der proximalen Antennenanordnung, die proximal zur Leistungsverstärker-Schaltungsanordnung ist, gefiltert zu werden ;
Mittel zum Weiterleiten des Ausgangs der zweiten Leistungsverstärker-Schaltungsanordnung an eine zweite entfernte Filterschaltungsanordnung, die von der zweiten Leistungsverstärker-Schaltungsanordnung entfernt ist, um für die Übertragung von der entfernten Antennenanordnung, die von der Leistungsverstärker-Schaltungsanordnung entfernt ist, gefiltert zu werden ;
wobei die zweite proximale Filterschaltungsanordnung konfiguriert ist, um eine gleichzeitige Übertragung in einer Übertragungsbandbreite eines dritten Bandes, einen Empfang in einer Empfangsbandbreite des dritten Bandes und einen Empfang in einer Empfangsbandbreite eines vierten Bandes zu ermöglichen, und umfasst
einen zweiten proximalen Duplexer, der für die Übertragungsbandbreite des dritten Bandes und die Empfangsbandbreite des dritten Bandes konfiguriert ist, einen zweiten proximalen Bandpassfilter für die Empfangsbandbreite des vierten Bandes und einen zweiten proximalen Diplexer zur Isolierung der Übertragungsbandbreite des dritten Bandes und der Empfangsbandbreite des vierten Bandes.

## Revendications

1. Un appareil (10) comprenant :
une circuiterie d'amplificateur de puissance (20) ;
une circuiterie de filtre proximal (40) proximale de la circuiterie d'amplificateur de puissance (20) ;
des moyens (30, 32) pour acheminer la sortie de la circuiterie d'amplificateur de puissance (20) vers la circuiterie de filtre proximal (40) pour être filtrée pour la transmission ;
des moyens (30, 34) pour acheminer la sortie de la circuiterie d'amplificateur de puissance (20) vers une circuiterie de filtre distant (140) distante de la circuiterie d'amplificateur de puissance (20) pour être filtrée pour la transmission ;
dans lequel la circuiterie de filtre proximal (40) est configurée pour assurer une transmission simultanée dans une largeur de bande de transmission d'une première bande, une réception dans une largeur de bande de réception de la première bande et une réception dans une largeur de bande de réception de la deuxième bande, et comprend
un duplexeur proximal (44) configuré pour la largeur de bande de transmission de la première bande et la largeur de bande de réception de la première bande, un filtre passe-bande proximal (42) pour la largeur de bande de réception de la deuxième bande, et un diplexeur proximal (46) pour isoler la largeur de bande de transmission de la première bande et la largeur de bande de réception de la deuxième bande.

2. Un appareil (10) selon la revendication 1, dans lequel la première bande et la deuxième bande sont adjacentes dans un spectre de fréquences.

3. Un appareil (10) selon la revendication 1, dans lequel la première bande et la deuxième bande sont configurables pour l'agrégation de porteuses.

4. Un appareil (10) selon la revendication 1, dans lequel la première bande et la deuxième bande sont inférieures à 1 GHz.

5. Un appareil (10) selon la revendication 1, dans lequel la première bande est n71 et la deuxième bande est n85.

6. Un appareil (10) selon la revendication 1, dans lequel la première bande est n5 et la deuxième bande est n28.

7. Un appareil (10) selon l'une quelconque des revendications précédentes, dans lequel la circuiterie de filtre proximal (40) présente deux minima de gain intermédiaires, dans lequel un minimum de gain intermédiaire est défini par le duplexeur proximal (44) au sein d'une bande, et un minimum de gain intermédiaire est défini par le diplexeur proximal (46) entre les bandes.

8. Un appareil (10) selon l'une quelconque des revendications précédentes, dans lequel le duplexeur proximal (44) est configuré pour isoler deux plages de fréquences dans la même bande ;
dans lequel le diplexeur proximal (46) est configuré pour isoler deux plages de fréquences dans des bandes distinctes et différentes.

9. Un appareil (10) selon l'une quelconque des revendications précédentes, comprenant des moyens de commutation pour acheminer la sortie de la circuiterie d'amplificateur de puissance (20) vers la circuiterie de filtre proximal (40) ou la circuiterie de filtre distant (140).

10. Un appareil (10) selon l'une quelconque des revendications précédentes, comprenant un agencement d'antenne couplé à la circuiterie de filtre proximal, dans lequel l'agencement d'antenne présente une largeur de bande opérationnelle qui inclut la largeur de bande de transmission de la première bande, la largeur de bande de réception de la première bande et la largeur de bande de réception de la deuxième bande.

11. Un appareil (10) selon l'une quelconque des revendications précédentes, configuré en tant que module.

12. Un appareil (10) selon l'une quelconque des revendications précédentes, comprenant :
une circuiterie de filtre distant (140) distante de la circuiterie d'amplificateur de puissance (20), configurée pour assurer une transmission dans une largeur de bande de transmission d'une deuxième bande, une réception dans une largeur de bande de réception de la deuxième bande et une réception dans une largeur de bande de réception de la première bande, et comprend
un duplexeur distant configuré pour la largeur de bande de transmission de la deuxième bande et la largeur de bande de réception de la deuxième bande, un filtre passe-bande distant pour la largeur de bande de réception de la première bande, et un diplexeur distant pour isoler la largeur de bande de transmission de la deuxième bande et la largeur de bande de réception de la première bande.

13. Un appareil (10) selon l'une quelconque des revendications précédentes, comprenant un agencement d'antenne distante couplé à la circuiterie de filtre distante, dans lequel l'agencement d'antenne distante présente une largeur de bande opérationnelle qui inclut la largeur de bande de transmission de la deuxième bande, la largeur de bande de réception de la deuxième bande et la largeur de bande de réception de la première bande.

14. Un appareil (10) selon l'une quelconque des revendications 12 ou 13, lorsqu'il dépend de la revendication 10, comprenant le module et comprenant un module supplémentaire comprenant au moins la circuiterie de filtre distant (140).

15. Un appareil (10) selon l'une quelconque des revendications précédentes, comprenant :
pour une première plage de fréquences
une circuiterie d'amplificateur de puissance (20) ;
une circuiterie de filtre proximal (40) proximale de la circuiterie d'amplificateur de puissance (20) ;
des moyens (30, 32) pour acheminer la sortie de la circuiterie d'amplificateur de puissance (20) vers la circuiterie de filtre proximal (40) pour être filtrée pour la transmission depuis un agencement d'antenne proximal proximal de la circuiterie d'amplificateur de puissance (20) ;
des moyens (30, 34) pour acheminer la sortie de la circuiterie d'amplificateur de puissance (20) vers la circuiterie de filtre distant (140) distante de la circuiterie d'amplificateur de puissance (20) pour être filtrée pour la transmission depuis un agencement d'antenne distant distant de la circuiterie d'amplificateur de puissance (20) ;
dans lequel la circuiterie de filtre proximal (40) est configurée pour assurer une transmission simultanée dans une largeur de bande de transmission d'une première bande, une réception dans une largeur de bande de réception de la première bande et une réception dans une largeur de bande de réception de la deuxième bande, et comprend
un duplexeur proximal (44) configuré pour la largeur de bande de transmission de la première bande et la largeur de bande de réception de la première bande, un filtre passe-bande proximal (42) pour la largeur de bande de réception de la deuxième bande, et un diplexeur proximal (46) pour isoler la largeur de bande de transmission de la première bande et la largeur de bande de réception de la deuxième bande ;
pour une deuxième plage de fréquences
une deuxième circuiterie d'amplificateur de puissance ;
une deuxième circuiterie de filtre proximal proximale de la deuxième circuiterie d'amplificateur de puissance ;
des moyens pour acheminer la sortie de la deuxième circuiterie d'amplificateur de puissance vers la deuxième circuiterie de filtre proximal pour être filtrée pour la transmission depuis l'agencement d'antenne proximal proximal de la circuiterie d'amplificateur de puissance ;
des moyens pour acheminer la sortie de la deuxième circuiterie d'amplificateur de puissance vers une deuxième circuiterie de filtre distant distante de la deuxième circuiterie d'amplificateur de puissance pour être filtrée pour la transmission depuis l'agencement d'antenne distant distant de la circuiterie d'amplificateur de puissance ;
dans lequel la deuxième circuiterie de filtre proximal est configurée pour assurer une transmission simultanée dans une largeur de bande de transmission d'une troisième bande, une réception dans une largeur de bande de réception de la troisième bande et une réception dans une largeur de bande de réception d'une quatrième bande, et comprend
un deuxième duplexeur proximal configuré pour la largeur de bande de transmission de la troisième bande et la largeur de bande de réception de la troisième bande, un deuxième filtre passe-bande proximal pour la largeur de bande de réception de la quatrième bande, et un deuxième diplexeur proximal pour isoler la largeur de bande de transmission de la troisième bande et la largeur de bande de réception de la quatrième bande.
